# DEMANDE DE BREVET EUROPEEN

(11) **EP 1 932 694 A1**
(43) Date de publication de la demande: **18.06.2008**
(21) Numéro de dépôt: 07301631.3
(22) Date de dépôt: 05.12.2007
(51) Int. Cl.: B60G 17/018, B60G 17/06

(54) **Procédé d'optimisation de la logique de commande de systèmes de suspension**

(30) Priorité: 11.12.2006 FR 0655420
(71) Demandeur: PEUGEOT CITROËN AUTOMOBILES SA, 78140 Vélizy Villacoublay (FR)
(72) Inventeur: Camp, Stéphane, 92800 Puteaux (FR)

(57) **Abrégé**

La présente invention concerne un procédé d'optimisation de la logique de commande d'un système de suspension d'un véhicule, notamment d'un véhicule automobile, comportant au moins quatre roues et deux essieux, chaque essieu supportant une paire de roues et au moins un amortisseur par roue relié à la caisse du véhicule : un amortisseur avant gauche (AvG) et un amortisseur avant droit (AvD) couplés au même essieu avant (Av), un amortisseur arrière gauche (ArG) et un amortisseur arrière droit (ArD) couplés au même essieu arrière (Ar), chaque amortisseur étant caractérisé par une cartographie (LEV) donnant l'effort apporté par l'amortisseur en fonction de la vitesse de débattement de l'amortisseur, l'amortisseur étant apte à être commandé pour atteindre un effort de consigne déterminé à l'intérieur d'une plage de fonctionnement délimitée par une courbe d'effort, ou de puissance d'amortissement maximale et une courbe d'effort, ou de puissance d'amortissement minimale, caractérisé en ce qu'il consiste, dans une première étape, à déterminer les courbes maximale (LEV Max) pour l'essieu avant (Av), respectivement l'essieu (Ar), et minimale (LEV Min) pour l'essieu avant (Av), respectivement l'essieu arrière (Ar), donnant la loi d'effort, ou de puissance d'amortissement atteignable par chaque amortisseur pour répondre à la logique de commande, et dans une deuxième étape, à partir des courbes obtenues à la première étape, à reconstituer les courbes minimales, respectivement maximales d'effort, ou de puissance d'amortissement atteignable sur l'essieu arrière (Ar) en fonction d'un rapport de démultiplication des amortisseurs (AvG, AvD, ArG, ArD) et du rapport de masse entre les essieux avant et arrière (Av, Ar).

## Description

Le procédé selon l'invention concerne un procédé d'optimisation de la logique de commande d'un système de suspension.

Il s'applique principalement, mais pas exclusivement, à l'optimisation d'un système de suspension équipant les véhicules, notamment les véhicules automobiles.

Le procédé selon l'invention s'applique en particulier à l'optimisation d'un système de suspension comportant des amortisseurs semi-actifs, une logique de commande de suspension « semi-active », appelée également loi de contrôle commande, et des cartographies unitaires des amortisseurs semi-actifs appelées également LEV unitaires (Loi Effort Vitesse).

Un système de suspension semi-actif est constitué d'une chaîne « capteur », « algorithme » et « amortisseurs ». Un tel système doit être « robuste » et donc prendre en compte des incertitudes provenant essentiellement des informations données par les capteurs mais aussi des efforts imprécis fournis par les amortisseurs.

L'état de l'art de l'industrialisation d'amortisseurs mono, bi ou tri-tube à nombre d'états finis ou continûment variables fait que la caractéristique principale de ces amortisseurs possède une dispersion de 10 à 30% autour de cette caractéristique.

La caractéristique principale d'un amortisseur est définie par une loi donnant l'effort apporté par l'amortisseur en fonction de la vitesse de compression ou de détente de l'amortisseur (vitesse de débattement) sous la forme d'une cartographie LEV. Dans le cas d'un amortisseur semi-actif, il existe un faisceau de courbes caractéristiques dépendant par exemple d'une intensité de commande délivrée par une logique de commande.

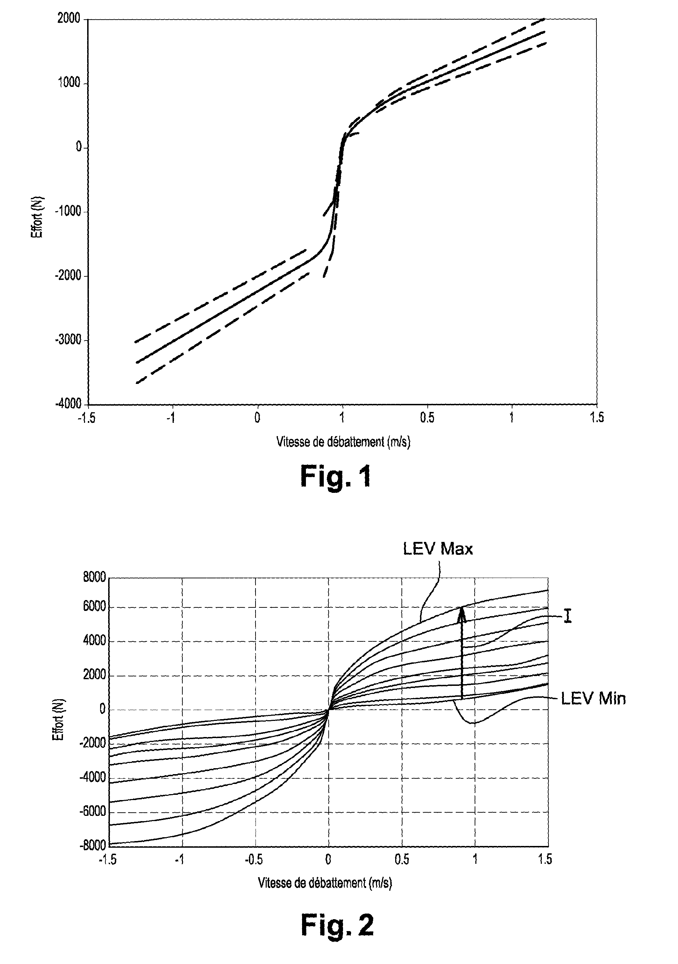

La figure 1 illustre un exemple de dispersion pour une loi d'effort déterminée, dans un repère dans lequel on a représenté, en ordonnée, l'effort atteignable par un amortisseur, exprimé en newton (N) et en abscisse, la vitesse de débattement de cet amortisseur exprimée en mètre par seconde (m/s). La dispersion est mise en évidence par une courbe correspondant à une caractéristique d'amortissement principale, ou nominale, représentée en trait plein, encadrée par deux courbes représentées en pointillés, qui en limite de débattement atteint + ou - 30% autour de la courbe nominale.

Du fait de ces dispersions, les différences d'efforts engendrées par les amortisseurs sur la caisse du véhicule posent des problèmes de robustesse de la prestation véhicule tant en confort qu'en comportement.

Pour pallier ce problème de dispersion, il est possible de tester tous les amortisseurs avant de les monter sur le véhicule et de n'accepter que ceux qui seront considérés comme conformes avec une dispersion faible admise autour de la caractéristique nominale. Ce test entraîne évidemment un surcoût important.

Dans le cadre d'un véhicule automobile à quatre roues, il peut être aussi intéressant « d'appairer » les amortisseurs pour éviter des dispersions importantes entre les roues d'un même essieu et ainsi entraîner un roulis parasite induit par les amortisseurs.

Il aussi possible d'utiliser les cartographies LEV unitaires de chaque amortisseur dans le cadre de la logique de commande. Ainsi, la logique de commande demande un effort (ou une puissance) à une vitesse donnée et adapte l'intensité de commande pour obtenir l'effort (ou puissance) de consigne à travers une cartographie propre à chaque amortisseur. Cette stratégie, connue, permet d'atteindre une erreur inférieure à environ 5% dans le faisceau. Par contre, cette stratégie génère des efforts atteignables très différenciés entre les amortisseurs d'un même essieu et entre l'essieu avant et l'essieu arrière aux limites du faisceau; ces limites sont désignées par courbes LEV maximale et minimale.

Le gain ainsi apporté sur la robustesse aux dispersions à l'intérieur du faisceau est par contre fortement dégradé sur les courbes maximale et minimale du faisceau.

Ceci est principalement dû à l'implantation des amortisseurs dans les trains roulants et à leur assiette ainsi qu'à la différence de masse entre les essieux.

La présente invention a pour but de pallier ces inconvénients

A cet effet, l'invention a pour objet un procédé d'optimisation de la logique de commande d'un système de suspension d'un véhicule, notamment d'un véhicule automobile, comportant au moins quatre roues et deux essieux, chaque essieu supportant une paire de roues et au moins un amortisseur par roue relié à la caisse du véhicule : un amortisseur avant gauche et un amortisseur avant droit couplés au même essieu avant, un amortisseur arrière gauche et un amortisseur arrière droit couplés au même essieu arrière, chaque amortisseur étant caractérisé par une cartographie donnant l'effort apporté par l'amortisseur en fonction de la vitesse de débattement de l'amortisseur, l'amortisseur étant apte à être commandé pour atteindre un effort de consigne déterminé à l'intérieur d'une plage de fonctionnement délimitée par une courbe d'effort, ou de puissance d'amortissement maximale et une courbe d'effort, ou de puissance d'amortissement minimale.

Le procédé est caractérisé en ce qu'il consiste, dans une première étape, à déterminer les courbes maximale pour l'essieu avant, respectivement l'essieu, et minimale pour l'essieu avant, respectivement l'essieu arrière, donnant la loi d'effort, ou de puissance d'amortissement atteignable par chaque amortisseur pour répondre à la logique de commande, et dans une deuxième étape, à partir des courbes obtenues à la première étape, à reconstituer les courbes minimales, respectivement maximales d'effort, ou de puissance d'amortissement atteignable sur l'essieu arrière en fonction d'un rapport de démultiplication des amortisseurs et du rapport de masse entre les essieux avant et arrière.

Le procédé, consiste dans la première étape :
- à déterminer les courbes maximale et minimale d'effort, ou de puissance d'amortissement atteignables par les amortisseurs des essieux avant et arrière ;
- à sélectionner les courbes maximales d'effort sur l'essieu avant et sur l'essieu arrière, ou de puissance d'amortissement atteignable pour répondre à la logique de commande par les amortisseurs avant gauche et avant droit de l'essieu avant, et respectivement par les amortisseurs arrière gauche et arrière droit de l'essieu arrière, à partir de la courbe minimale des courbes maximales d'effort, ou de puissance d'amortissement atteignable par les amortisseurs des essieux avant et arrière ; et
- à sélectionner les courbes minimales d'effort de l'essieu avant et de l'essieu arrière, ou de puissance d'amortissement atteignable pour répondre à la logique de commande par les amortisseurs avant gauche et avant droit de l'essieu avant, et respectivement par les amortisseurs arrière gauche et arrière droit de l'essieu arrière, à partir de la courbe maximale des courbes minimales d'effort, ou de puissance d'amortissement atteignable par les amortisseurs des essieux avant et arrière.

Le procédé consiste dans la deuxième étape:
- à effectuer un changement de repère de la courbe maximale d'effort de l'essieu avant, respectivement de la courbe minimale d'effort de l'essieu avant en appliquant le coefficient de démultiplication au repère d'origine; et
- à multiplier les points des courbes maximale d'effort, respectivement minimale, dans le nouveau repère, par le rapport de masse entre les essieux avant et arrière, ou un rapport d'amortissement voulu déterminé; ces dernières courbes donnant les consignes maximale et minimale pour l'essieu arrière;
- à effectuer un changement de repère du faisceau de courbes caractérisant les amortisseurs de l'essieu arrière en appliquant le coefficient de démultiplication au repère d'origine ; et
- à partir du faisceau de courbes dans le nouveau repère et des consignes maximale et minimale à appliquer pour l'essieu arrière, à rechercher l'intensité de commande de la loi de commande nécessaire pour obtenir ces consignes. Selon une caractéristique, l'intensité de commande est utilisée pour atteindre la courbe d'effort maximale à partir de la courbe minimale des courbes maximales de l'essieu arrière, et respectivement, pour atteindre la courbe d'effort minimale à partir de la courbe maximale des courbes minimales de l'essieu arrière.

Selon une caractéristique, dans la deuxième étape, le procédé effectue un changement de repère en multipliant l'axe des abscisses du repère d'origine par le coefficient de démultiplication, à multiplier les point de la courbe par le coefficient de démultiplication et à multiplier les points de la courbe par le rapport des masse des essieux avant et arrière.

Le procédé selon l'invention permet d'apporter de la robustesse logicielle à tout système comportant une loi de contrôle commande, ou logique de commande de suspension « semi-active » basée sur des cartographies unitaires LEV des amortisseurs semi-actifs.

Avec le procédé selon l'invention, on rend la logique de commande, quel que soit l'algorithme utilisé (LQG/LQR, Skyhook, placement pôles robustes, logique floue, neuronal...) robuste aux différences entre amortisseurs, différences générées par les processus d'industrialisation, ainsi qu'à l'implantation des amortisseurs sur le véhicule.

L'invention sera mieux comprise à la lumière de la description qui suit en référence aux figures des dessins annexés parmi lesquelles :
- la figure 1, déjà décrite, illustre une LEV unitaire d'un amortisseur selon l'état de l'art ;
- la figure 2 illustre un faisceau de LEV typique d'un amortisseur piloté selon l'état de l'art ;
- la figure 3 illustre la première étape du procédé selon l'invention ;
- la figure 4 illustre la deuxième étape du procédé selon l'invention ;
- la figure 5 illustre le concept de démultiplication appliqué dans la deuxième étape du procédé selon l'invention ; et
- la figure 6 illustre la courbe nominale corrigée, obtenue après prise en compte de la démultiplication des amortisseurs et des différences de masses entre essieux.

La figure 2 illustre un exemple de faisceau de LEV typique d'un amortisseur semi actif piloté.

Cette figure illustre l'évolution de l'effort, exprimé en newton (N), en fonction de la vitesse de débattement de l'amortisseur, exprimée en mètre par seconde (m/s), quand l'amortisseur est soumis à une intensité de commande I croissante telle que représenté sur la figure par une flèche verticale.

Ce faisceau de courbes délimite une plage de fonctionnement de l'amortisseur piloté entre une LEV maximale et une LEV minimale.

Le procédé est décrit ci-après en prenant pour exemple un véhicule automobile comportant quatre roues et deux essieux, chaque essieu supportant une paire de roues et un amortisseur par roue : un amortisseur avant gauche AvG, un amortisseur avant droit AvD couplés au même essieu avant Av et un amortisseur arrière gauche ArG et un amortisseur arrière droit ArD couplé au même essieu arrière Ar.

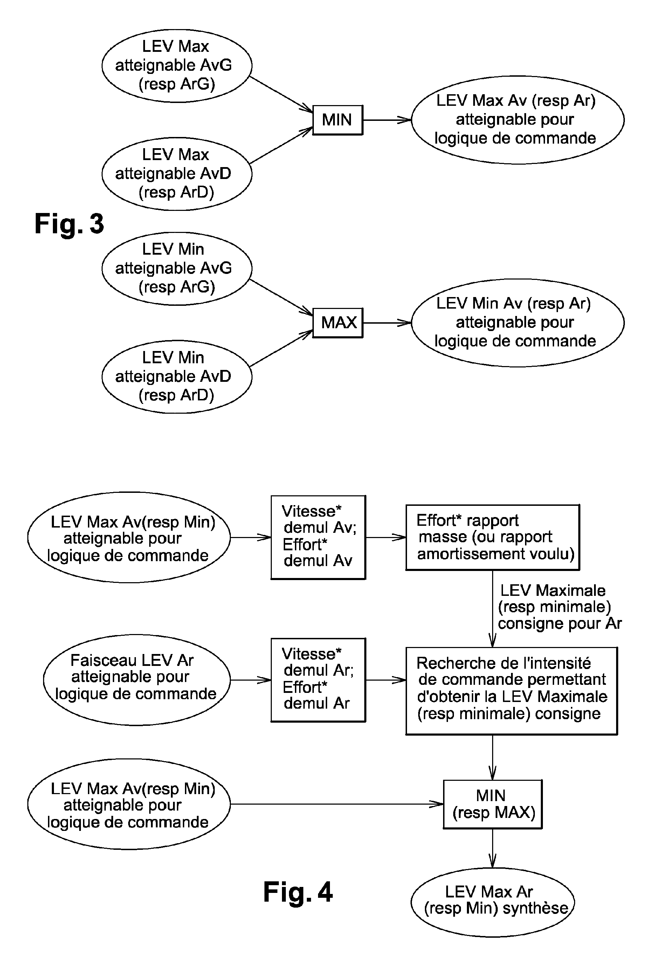

Dans une première étape, illustrée à la figure 3, le procédé selon l'invention consiste à déterminer la courbe maximale LEV Max Av pour l'essieu avant Av (respectivement la courbe maximale LEV Max Ar pour l'essieu arrière Ar) et minimale LEV Min Av pour l'essieu avant Av (respectivement la courbe minimale LEV Min Ar pour l'essieu arrière Ar) donnant la loi d'effort (ou de puissance) atteignable par chaque amortisseur AvG, AvD, ArG, ArD pour répondre à la logique de commande.

Dans une deuxième étape, illustrée à la figure 4, le procédé selon l'invention consiste à déterminer la courbe maximale LEV Max, respectivement minimale d'effort (ou de puissance) sur un essieu en fonction d'un rapport de démultiplication des amortisseurs AvG, AvD, ArG, ArD et du rapport de masse entre les essieux avant Av et arrière Ar ou, à titre de variante, en fonction d'un rapport d'amortissement déterminé souhaité entre les essieux avant et arrière Av, Ar.

Les différentes implantations des amortisseurs dans les trains roulants font que pour une même vitesse de débattement de la caisse, l'amortisseur se comprime à des vitesses différentes suivant l'assiette du train (ou essieu).

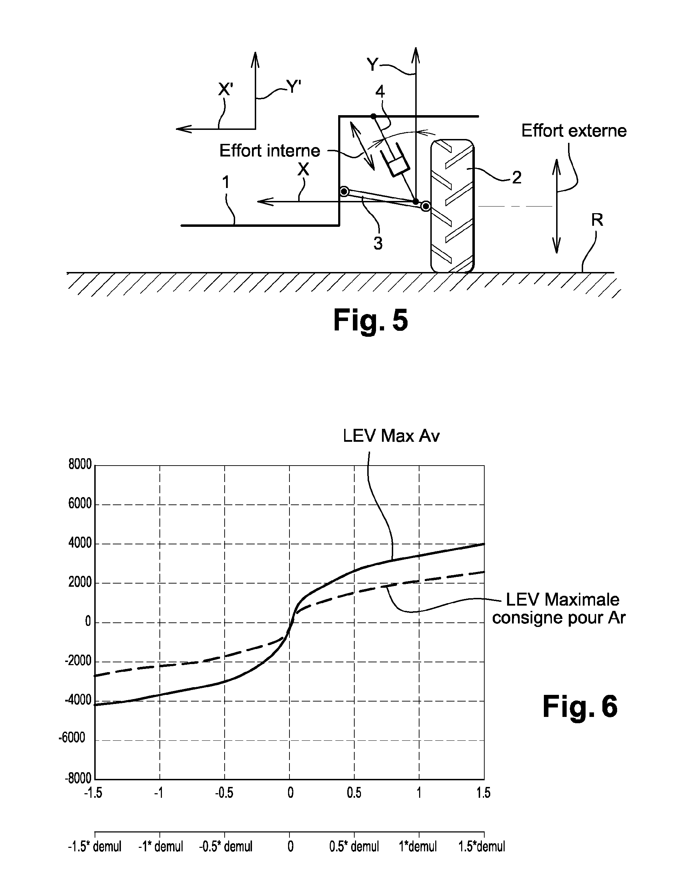

On introduit donc un coefficient de démultiplication demul -qui permet de prendre en compte cet effet. Ce coefficient vaut 1 dans le cas d'un amortisseur disposé suivant une direction verticale (dans le plan de la figure 5). Il est différent de 1 en étant inférieur à 1 quand l'axe principal de l'amortisseur forme un angle non nul avec la verticale.

La figure 5 illustre cet effet et représente schématiquement et partiellement la caisse 1 d'un véhicule reliée à la roue 2 par un bras de suspension 3. La roue 2 repose sur une route R. Un amortisseur 4 de type classique, par exemple mono tube, est disposé entre le bras de suspension 3 et la caisse 1 du véhicule. Sa direction principale forme un angle non nul avec la verticale. Le coefficient de démultiplication demul est donc, pour cette implantation, différent de 1.

On a également représenté sur cette figure l'effort externe qui correspond à l'effet de la route R sur la roue 2 (effort dont la direction principale d'application est sensiblement verticale) ainsi que l'effort interne qui correspond à l'effet de l'amortisseur 4 sur la caisse 1 (effort dont la direction principale d'application est sensiblement parallèle à la direction principale de l'amortisseur). L'effort externe appliqué sur la roue 2 se traduit donc au niveau de l'amortisseur 4 par un effort et une vitesse de débattement qui dépendent de l'angle représenté par une double flèche en trait interrompu.

On a représenté enfin un référentiel X', Y', symbolisant un changement de repère par rapport à un référentiel X, Y d'origine qui correspondrait au cas ou le coefficient de démultiplication vaut 1, c'est-à-dire au cas ou la direction principale de l'amortisseur 4 est verticale donc confondu avec l'axe Y.

On décrit maintenant ci-après, en détail, les première et deuxième étapes du procédé selon l'invention en référence aux figures 3 et 4.

Le procédé consiste dans la première étape (figure 3) :
- à déterminer les courbes maximale LEV Max et minimale LEV Min d'effort, ou de puissance d'amortissement atteignables par les amortisseurs des essieux avant et arrière Av, Ar ;
- à sélectionner les courbes maximales d'effort sur l'essieu avant LEV Max Av et sur l'essieu arrière LEV Max Ar, ou de puissance d'amortissement atteignables pour répondre à la logique de commande par les amortisseurs avant gauche et avant droit AvG, AvD de l'essieu avant Av , et respectivement par les amortisseurs arrière gauche et arrière droit ArG, ArD de l'essieu arrière Ar, à partir de la courbe minimale MIN des courbes maximales d'effort LEV Max, ou de puissance d'amortissement atteignable par les amortisseurs AvG, AvD, ArG, ArD des essieux avant Av et arrière Ar ; et
- à sélectionner les courbes minimales d'effort de l'essieu avant LEV Min Av et de l'essieu arrière LEV Min Ar, ou de puissance d'amortissement atteignables pour répondre à la logique de commande par les amortisseurs avant gauche et avant droit AvG, AvD de l'essieu avant Av, et respectivement par les amortisseurs arrière gauche et arrière droit ArG, ArD de l'essieu arrière Ar, à partir de la courbe maximale MAX des courbes minimales d'effort LEV Min, ou de puissance d'amortissement atteignables par les amortisseurs AvG, AvD, ArG, ArD des essieux avant Av et arrière Ar.

Le procédé selon l'invention consiste dans la deuxième étape (figure 4) :
- à effectuer un changement de repère X', Y' de la courbe maximale d'effort de l'essieu avant LEV Max Av, respectivement de la courbe minimale d'effort de l'essieu avant LEV Min Av en appliquant le coefficient de démultiplication demul au repère d'origine X, Y ; et
- à multiplier les points des courbes maximale d'effort LEV Max Av, respectivement minimale LEV Min Av, dans le nouveau repère X', Y', par le rapport de masse entre les essieux avant et arrière Av, Ar, ou un rapport d'amortissement demul voulu déterminé ; ces dernières courbes LEV Max Av, LEV Min Av donnant les consignes maximale et minimale pour l'essieu arrière Ar;
- à effectuer un changement de repère du faisceau de courbes LEV Ar caractérisant les amortisseurs de l'essieu arrière Ar en appliquant le coefficient de démultiplication demul au repère d'origine X, Y ; et
- à partir du faisceau de courbes dans le nouveau repère X', Y' et des consignes maximale et minimale à appliquer pour l'essieu arrière Ar, à rechercher l'intensité de commande 1 de la loi de commande nécessaire pour obtenir ces consignes;

L'intensité de commande I est utilisée pour atteindre la courbe d'effort maximale LEV Max Ar à partir de la courbe minimale MIN des courbes maximales LEV Max Ar de l'essieu arrière Ar, et respectivement, pour atteindre la courbe d'effort minimale LEV Min Ar à partir de la courbe maximale MAX des courbes minimales de l'essieu arrière Ar.

La figure 6 illustre graphiquement le résultat du traitement effectué par le procédé selon l'invention dans un repère dans lequel on a porté en ordonnée l'effort exprimé en newton (N) et en abscisse, la vitesse de débattement exprimé en mètre par seconde (m/s).

On a représenté en trait plein une première courbe avant traitement par la deuxième étape du procédé. Cette courbe correspond, par exemple, à la courbe LEV max Av des figures 3 et 4.

On a représenté également, en trait interrompu, une deuxième courbe correspondant à la première courbe après traitement par la deuxième étape du procédé selon l'invention et qui correspond à la courbe LEV Maximale de consigne pour l'essieu arrière Ar.

Cette deuxième courbe a été obtenue après changement de repère, par exemple, en multipliant l'axe des abscisses X du repère d'origine X, Y par le coefficient de démultiplication demul, puis en multipliant les point de la courbe par le coefficient de démultiplication demul et, enfin, en multipliant ces derniers points par le rapport des masses des essieux avant et arrière Av, Ar.

On comprend ensuite en référence avec les figures 2 et 4, que l'intensité du courant de commande I est adapté pour obtenir l'effort (ou la puissance) de consigne souhaité pour répondre à la loi de commande avec une dispersion aux limites optimisées.

## Revendications

1. Procédé d'optimisation de la logique de commande d'un système de suspension d'un véhicule, notamment d'un véhicule automobile, comportant au moins quatre roues et deux essieux, chaque essieu supportant une paire de roues et au moins un amortisseur par roue relié à la caisse du véhicule : un amortisseur avant gauche (AvG) et un amortisseur avant droit (AvD) couplés au même essieu avant (Av), un amortisseur arrière gauche (ArG) et un amortisseur arrière droit (ArD) couplés au même essieu arrière (Ar), chaque amortisseur étant **caractérisé par** une cartographie (LEV) donnant l'effort apporté par l'amortisseur en fonction de la vitesse de débattement de l'amortisseur, l'amortisseur étant apte à être commandé pour atteindre un effort de consigne déterminé à l'intérieur d'une plage de fonctionnement délimitée par une courbe d'effort, ou de puissance d'amortissement maximale et une courbe d'effort, ou de puissance d'amortissement minimale, **caractérisé en ce qu'**il consiste, dans une première étape, à déterminer les courbes maximale (LEV Max) pour l'essieu avant (Av), respectivement l'essieu (Ar), et minimale (LEV Min) pour l'essieu avant (Av), respectivement l'essieu arrière (Ar), donnant la loi d'effort, ou de puissance d'amortissement atteignable par chaque amortisseur (AvG, AvD, ArG, ArD) pour répondre à la logique de commande, et dans une deuxième étape, à partir des courbes obtenues à la première étape, à reconstituer les courbes minimales, respectivement maximales d'effort, ou de puissance d'amortissement atteignable sur l'essieu arrière (Ar) en fonction d'un rapport de démultiplication (demul) des amortisseurs (AvG, AvD, ArG, ArD) et du rapport de masse entre les essieux avant et arrière (Av, Ar).

2. Procédé selon la revendication 1, **caractérisé en ce que** dans la première étape, il consiste :
- à déterminer les courbes maximale (LEV Max) et minimale (LEV Min) d'effort, ou de puissance d'amortissement atteignables par les amortisseurs des essieux avant et arrière (Av, Ar) ;
- à sélectionner les courbes maximales d'effort sur l'essieu avant (LEV Max Av) et sur l'essieu arrière (LEV Max Ar), ou de puissance d'amortissement atteignable pour répondre à la logique de commande par les amortisseurs avant gauche et avant droit (AvG, AvD) de l'essieu avant (Av), et respectivement par les amortisseurs arrière gauche et arrière droit (ArG, ArD) de l'essieu arrière (Ar), à partir de la courbe minimale (MIN) des courbes maximales d'effort (LEV Max), ou de puissance d'amortissement atteignable par les amortisseurs (AvG, AvD, ArG, ArD) des essieux avant (Av) et arrière (Ar) ; et
- à sélectionner les courbes minimales d'effort de l'essieu avant (LEV Min Av) et de l'essieu arrière (LEV Min Ar), ou de puissance d'amortissement atteignable pour répondre à la logique de commande par les amortisseurs avant gauche et avant droit (AvG, AvD) de l'essieu avant (Av), et respectivement par les amortisseurs arrière gauche et arrière droit (ArG, ArD) de l'essieu arrière (Ar), à partir de la courbe maximale (MAX) des courbes minimales d'effort (LEV Min), ou de puissance d'amortissement atteignable par les amortisseurs (AvG, AvD, ArG, ArD) des essieux avant (Av) et arrière (Ar).

3. Procédé selon la revendication 2, **caractérisé en ce que** dans la deuxième étape, il consiste :
- à effectuer un changement de repère de la courbe maximale d'effort de l'essieu avant (LEV Max Av), respectivement de la courbe minimale d'effort de l'essieu avant (LEV Min Av) en appliquant le coefficient de démultiplication (demul) au repère d'origine (X, Y) ; et
- à multiplier les points des courbes maximale d'effort (LEV Max Av), respectivement minimale (LEV Min Av), dans le nouveau repère (X', Y'), par le rapport de masse entre les essieux avant et arrière (Av, Ar), ou un rapport d'amortissement voulu déterminé ; ces dernières courbes (LEV Max Av', LEV Min Av') donnant les consignes maximale et minimale pour l'essieu arrière (Ar) ;
- à effectuer un changement de repère du faisceau de courbes (LEV Ar) caractérisant les amortisseurs de l'essieu arrière (Ar) en appliquant le coefficient de démultiplication (demul) au repère d'origine (X, Y) ; et
- à partir du faisceau de courbes dans le nouveau repère (X', Y') et des consignes maximale et minimale à appliquer pour l'essieu arrière (Ar), à rechercher l'intensité de commande (I) de la loi de commande nécessaire pour obtenir ces consignes.

4. Procédé selon la revendication 3, **caractérisé en ce que** l'intensité de commande (I) est utilisée pour atteindre la courbe d'effort maximale (LEV Max Ar) à partir de la courbe minimale (MIN) des courbes maximales (LEV Max Ar) de l'essieu arrière (Ar), et respectivement, pour atteindre la courbe d'effort minimale (LEV Min Ar) à partir de la courbe maximale (MAX) des courbes minimales de l'essieu arrière (Ar).

5. Procédé selon l'une des revendications 3 et 4, **caractérisé en ce que** dans la deuxième étape, le procédé effectue un changement de repère en multipliant l'axe des abscisses (X) du repère d'origine (X, Y) par le coefficient de démultiplication (demul), à multiplier les point de la courbe par le coefficient de démultiplication (demul) et à multiplier les points de la courbe par le rapport des masse des essieux avant et arrière (Av, Ar).
